# EUROPEAN PATENT APPLICATION

(11) **EP 3 951 969 A1**
(43) Date of publication of application: **09.02.2022**
(21) Application number: 20867969.6
(22) Date of filing: 21.09.2020
(51) Int. Cl.: H01M 10/04

(54) **ELECTRODE ASSEMBLY HAVING DEPRESSED SECTION FORMED IN ELECTRODE TAB, GUIDE MEMBER FOR STACKING SAME, AND METHOD OF MANUFACTURING STACK-TYPE BATTERY USING SAME**

(30) Priority: 27.09.2019 KR 20190119975
(71) Applicant: LG ENERGY SOLUTION, LTD., Seoul 07335 (KR)
(72) Inventor: SEO, Tai Joon, Daejeon 34122 (KR); LEE, Woo Yong, Daejeon 34122 (KR)
(74) Representative: Plasseraud IP
(86) International application number: PCT/KR2020/012702
(87) International publication number: WO 2021/060783

(57) **Abstract**

Disclosed are an electrode assembly including a plurality of electrode sheets having outwardly protruding electrode tabs and a separator interposed between the plurality of electrode sheets, wherein a depressed portion is inwardly formed in at least one of three surfaces of each rectangular electrode tab protruding outwards from the electrode assembly, a guide member configured to stack the same, and a stacked type battery manufacturing method using the same.

## Description

### [Technical Field]

This application claims the benefit of priority to Korean Patent Application No. 2019-0119975 filed on September 27, 2019, the disclosure of which is hereby incorporated by reference herein its entirety.

The present invention relates to an electrode assembly having a depression portion formed in an electrode tab, a guide member configured to stack the same, and a stacked type battery manufacturing method using the same. More particularly, the present invention relates to an electrode assembly including a plurality of electrode sheets having outwardly protruding electrode tabs and a separator interposed between the plurality of electrode sheets, wherein a depressed portion is inwardly formed in at least one of three surfaces of each rectangular electrode tab protruding outwards from the electrode assembly, a guide member configured to stack the same, and a stacked type battery manufacturing method using the same.

### [Background Art]

With technological development of mobile devices and an increase in the demand therefor, the demand for secondary batteries as energy sources has sharply increased. Among such secondary batteries is a lithium secondary battery having a high energy density and a high discharge voltage, into which much research has been carried out and which has also been commercialized and widely used.

An electrode assembly, which is mounted in a battery case, is a power generating element that has a structure in which a positive electrode, a separator, and a negative electrode are stacked and that can be charged and discharged. The electrode assembly is classified as a jelly-roll type electrode assembly, which is configured to have a structure in which a long sheet type positive electrode and a long sheet type negative electrode, to which active materials are applied, are wound in the state in which a separator is disposed between the positive electrode and the negative electrode, a stacked type electrode assembly, which is configured to have a structure in which a plurality of positive electrodes having a predetermined size and a plurality of negative electrodes having a predetermined size are sequentially stacked in the state in which separators are disposed respectively between the positive electrodes and the negative electrodes, or a stacked/folded type electrode assembly, which is configured to have a structure in which unit cells, such as full cells or bi-cells, are wound using a separation film. Thereamong, the stacked type electrode assembly has an advantage in that it is possible to easily obtain various forms of electrodes.

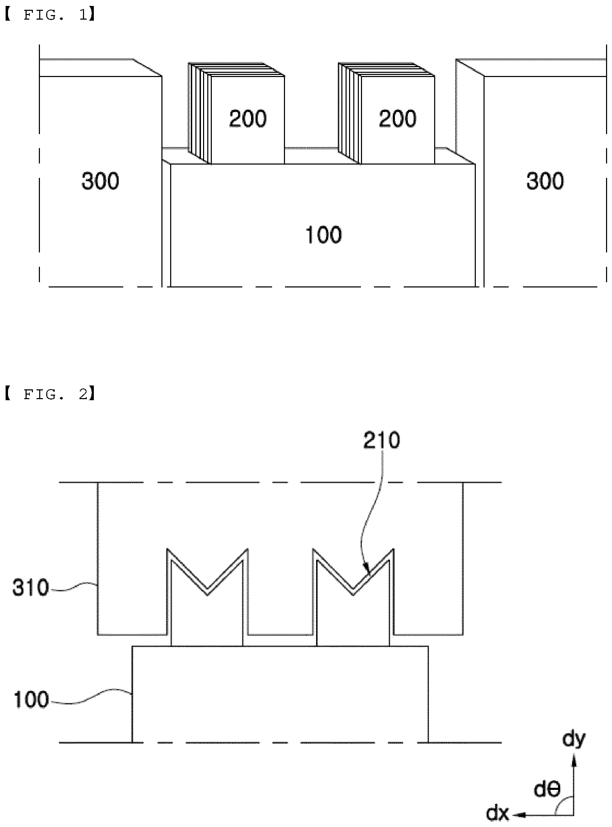

FIG. 1 is a top view schematically showing a conventional stacked type electrode assembly and a guide member based thereon. As can be seen from FIG. 1, the conventional stacked type electrode assembly has electrode tabs 200 protruding from electrode assemblies 100, and guide members 300 configured to fix the electrode assemblies 100 are provided. However, specific surfaces of the conventional electrode assemblies 100, as shown in FIG. 1, contact the guide members 300. As a result, positive electrodes or negative electrodes of the electrode assemblies 100 may be pushed by external impact or at the time of stacking the electrode assemblies 100, whereby short circuit may occur or the positions of the electrode tabs 200 may be changed. Conventionally, in order to overcome this, the size of the positive electrode of each of the electrode assemblies 100 was designed so as to be less than the size of the negative electrode to prevent short circuit between the electrode assemblies. In this case, however, there is a problem in that the capacity of a battery is reduced.

Also, in the case in which a further alignment process is added to prevent movement of the electrode assemblies 100 in order to solve the above problem, a manufacturing process is complicated, and it is difficult to prevent shaking of the electrode assemblies after alignment, whereby the alignment effect does not seem to be great. In connection therewith, Patent Document 1 simplifies a manufacturing process by fitting an electrode tab having a hole formed therein between a flat plate and a guide member located vertically above the plate so as to be spaced apart from the plate, the guide member having two bars formed thereon and overcomes a phenomenon in which electrode tabs are pushed at the time of stacking. When the guide member having the two bars is separated from an electrode assembly, however, the stacked electrode tabs may move. In addition, a predetermined portion of the electrode tab having the simple hole is fixed, but not the entirety of the electrode tab is fixed so as not to move in all directions, i.e. an upward direction, a downward direction, a leftward direction, and a rightward direction. Furthermore, a predetermined gap is generated from the bars due to the characteristics of a circular shape, and complete fixing is not achieved due to such a gap.

Patent Document 2 discloses a positioning opening used for positioning at the time of assembly, wherein the positioning opening is configured to be easily removed after stacking using a guide pin, whereby a phenomenon in which electrode tabs are pushed at the time of stacking is overcome. In this case, however, fixing of an electrode assembly, which may move in all directions, i.e. an upward direction, a downward direction, a leftward direction, and a rightward direction, is not considered.

In the case of the stacked type electrode assembly, as described above, stacking is complicated and troublesome, and it is necessary to maintain the fixed state thereof even after stacking. Therefore, there is a need for an electrode assembly configured to be fixed such that the electrode assembly does not move in all directions while an electrode assembly stacking process is simplified, a guide member therefor, and a stacking method thereof.

### - Prior Art Documents -

### - Patent Documents -

(Patent Document 1) Korean Patent Application Publication No. 2019-0041852 (2019.04.23)
(Patent Document 2) Japanese Patent Application Publication No. 2002-270242 (2002.09.20)

### [ Disclosure]

### [ Technical Problem]

The present invention has been made in view of the above problems, and it is an object of the present invention to provide an electrode assembly including a plurality of electrode sheets having outwardly protruding electrode tabs and a separator interposed between the plurality of electrode sheets, wherein a depressed portion is inwardly formed in at least one of three surfaces of each rectangular electrode tab protruding outwards from the electrode assembly, a guide member configured to stack the same, and a stacked type battery manufacturing method using the same.

### [Technical Solution]

In order to accomplish the above object, the present invention provides an electrode assembly including a plurality of electrode sheets having outwardly protruding electrode tabs and a separator interposed between the plurality of electrode sheets, wherein each of the electrode tabs has a hexahedral shape, and a depressed portion is inwardly formed in at least one of three surfaces of each electrode tab excluding a surface completely contacting the electrode assembly, among side surfaces of the electrode tab perpendicular to a stacking plane of the electrode tabs.

The depressed portion may be formed in an edge abutting each of the three surfaces of the electrode tab, may be formed through the electrode tab without abutting each of the three surfaces of the electrode tab, or may be simultaneously formed in the inner surface and the edge of the electrode tab.

In addition, the depressed portion may be formed in at least one of the three surfaces of the electrode tab in a triangular shape, a concavo-convex shape, a serrated shape, a semicircular shape, or a half-elliptical shape. Alternatively, the shape of the depression portion may consist of a curved line and/or a straight line alone.

In addition, the depressed portions may be formed in respective surfaces of the electrode tab perpendicular to the electrode assembly, and the depressed portions may be symmetric to each other.

The depressed portion may be configured so as to have a shape capable of forming one or more catching portions in the electrode tab.

In addition, the present invention provides an electrode assembly stacking guide member configured to correspond to a plurality of electrode assemblies having formed therein the depressed portions, wherein the electrode assembly stacking guide member is configured to enable the electrode assemblies to be stacked while being aligned.

The electrode assembly stacking guide member may include a flat plate and moving members configured to be movable in an upward-downward direction and/or in a leftward-rightward direction depending on the shape of the electrode tabs.

In addition, the present invention provides a stacked type battery manufacturing method including (1) preparing a plurality of electrode sheets, each of the electrode sheets including electrode tabs having depressed portions, (2) stacking the electrode sheets and a separator to manufacture an electrode assembly, (3) fitting the guide member on the electrode tabs of the electrode assembly to align the electrode assembly, and (4) fixing the electrode assembly and removing the guide member.

In addition, in step (3), the guide member may fix the electrode assembly so as not to move in dx, dy, and dθ directions based on the electrode tabs.

In addition, in step (4), the guide member may be separated leftwards and rightwards.

In addition, in step (4), the moving members of the guide member may be separated and moved from the flat plate at the lower end thereof so as to be removed from the electrode assembly after fixing of the electrode assembly.

In the present invention, one or more constructions that do not conflict with each other may be selected and combined from among the above constructions.

### [ Description of Drawings]

FIG. 1 is a top view schematically showing a conventional stacked type electrode assembly and a guide member based thereon.
FIG. 2 is a top view schematically showing an electrode assembly according to a first embodiment of the present invention and a guide member based thereon.
FIG. 3 is a top view schematically showing an electrode assembly according to a second embodiment of the present invention and a guide member based thereon.
FIG. 4 is a top view schematically showing an electrode assembly according to a third embodiment of the present invention and a guide member based thereon.
FIG. 5 is a perspective view schematically showing the electrode assembly according to the third embodiment of the present invention and the guide member based thereon.
FIG. 6 is a top view schematically showing an electrode assembly according to a fourth embodiment of the present invention and a guide member based thereon.
FIG. 7 is a top view schematically showing an electrode assembly according to a fifth embodiment of the present invention and a guide member based thereon.
FIG. 8 is a top view schematically showing an electrode assembly according to a sixth embodiment of the present invention and a guide member based thereon.
FIG. 9 is a top view schematically showing an electrode assembly according to a seventh embodiment of the present invention and a guide member based thereon.
FIG. 10 is a perspective view schematically showing the state of the guide member according to the third embodiment of the present invention before stacking of electrode assemblies.
FIG. 11 is a perspective view schematically showing the state of the guide member according to the third embodiment of the present invention after stacking of the electrode assemblies.

### [ Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part in the specification, not only may the one part be directly connected to the other part, but also, the one part may be indirectly connected to the other part via a further part. In addition, that a certain element is included does not mean that other elements are excluded, but means that such elements may be further included unless mentioned otherwise.

Hereinafter, the present invention will be described with reference to the following embodiments. These embodiments are provided only for easier understanding of the present invention and should not be construed as limiting the scope of the present invention.

Embodiments of the present invention will be described in detail with reference to the accompanying drawings.

The present invention provides an electrode assembly including a plurality of electrode sheets having outwardly protruding electrode tabs and a separator interposed between the plurality of electrode sheets, wherein each of the electrode tabs has a hexahedral shape, and a depressed portion is inwardly formed in at least one of three surfaces of each rectangular electrode tab protruding outwards from the electrode assembly.

Any one of three surfaces of the rectangular electrode tab means any one of three surfaces of the rectangular electrode tab excluding the surface completely contacting the electrode assembly, among side surfaces of the electrode tab perpendicular to a stacking plane of the electrode tabs.

That is, when viewed from the three surfaces, one or more electrode tabs are shown as being stacked.

The depressed portion may be formed in an edge abutting each of the three surfaces of the electrode tab, may be formed through the electrode tab without abutting each of the three surfaces of the electrode tab, or may be simultaneously formed in the inner surface and the edge of the electrode tab.

In addition, the depressed portion may be formed in at least one of the three surfaces of the electrode tab in a triangular shape, a concavo-convex shape, a serrated shape, a semicircular shape, or a half-elliptical shape. Alternatively, the shape of the depression portion may consist of a curved line and/or a straight line alone.

The three surfaces of the electrode tab are the surfaces of the electrode tabs that do not contact a body of the electrode assembly. At this time, the depressed portion may be formed in only one of the three surfaces of the electrode tab, may be formed in each of the three surfaces of the electrode tab, or may be formed in each of the two surfaces opposite each other, among the three surfaces of the electrode tab.

Specifically, FIG. 2 is a top view schematically showing an electrode assembly according to a first embodiment of the present invention and a guide member based thereon.

Referring to FIG. 2, a depressed portion 210 is formed in one surface of each electrode tab protruding outwards from the electrode assembly 100 so as to be depressed inwards. The depressed portion 210 is formed in the surface of the electrode tab parallel to a coupling portion between the electrode assembly 100 and the electrode tab. At this time, a guide member 310 is formed so as to have a shape corresponding to the depressed portions 210. After electrode assemblies 100 are stacked, the guide member 310 may be moved in a dy direction or the electrode assemblies 100 may be moved. FIG. 2 shows triangular depressed portions 210. However, the shape of each depressed portion is not restricted as long as at least one catching portion consisting of a protruding portion and a repressed portion can be formed. The catching portion mentioned above means a portion caught by the guide member to fix the electrode tab such that the electrode tab cannot move in a dx direction and/or in the dy direction. In the case in which only a single catching portion is provided, however, the catching portion must have a shape capable of fixing the electrode tab such that the electrode tab cannot move in the dy and dx directions. In the case in which two or more catching portions are provided, the shape of each of the catching portions is not restricted as long as the electrode tab is fixed in the dy and dx directions by any one of the two or more catching portions, i.e. the electrode tab is fixed so as not to move in the dy and dx directions when viewed based on all of the catching portions. In addition to the shape shown in FIG. 2, the depressed portion may have a shape such as an M shape, a W shape, or a U shape. However, the present invention is not limited thereto, and the depressed portion may have any of various shapes. In addition, the depressed portion may have a triangular shape, a concavo-convex shape, a serrated shape, a semicircular shape, or a half-elliptical shape. In the case in which the depressed portion has a concavo-convex shape, the depressed portion has an advantage in that the depressed portion is capable of more securely holding the electrode tab such that the electrode tab cannot move in the dx direction, in the dy direction, and in a dθ direction. In the case in which the depressed portion has a triangular shape, a semicircular shape, or a half-elliptical shape, the depressed portion has an advantage in that it is possible to easily remove the guide member when the depressed portion is formed in the upper part of the electrode tab, as in the first embodiment. Particularly, in the case in which the depressed portion has a semicircular shape or a half-elliptical shape, the depressed portion has another advantage in that a phenomenon in which the electrode tab is worn as the result of being caught by the guide member 310 is reduced, compared to the case in which the depressed portion has a concavo-convex shape. In the case in which the depressed portion has a semicircular shape, the depressed portion may form a portion capable of holding the electrode tab while reducing loss of the electrode tab, compared to the case in which the depressed portion has a half-elliptical shape. Consequently, it is preferable that the depressed portion have a semicircular shape. In addition, at least one of the three surfaces of the electrode tab may be serrated, and the guide member may be configured to hold the serrated electrode tab. In the case in which the depressed portion has a serrated shape, the depressed portion has an advantage in that it is possible to increase the area of coupling between the electrode tab and the guide member 310 while reducing a lost portion of the electrode tab. In addition, the depressed portion 210 may be formed in a curved shape or a straight shape depending on the portion of the electrode tab, the shape of the electrode assembly 100, the connection part of the electrode tab, power consumption, etc. Furthermore, the depressed portion 210 may have any of various shapes depending on purpose. All of the shapes that the electrode tabs may have are applicable to all of the following embodiments.

The electrode assembly 100 may be easily fixed through the electrode tabs 200 having the depressed portions 210 described above, whereby concern about short circuit due to shaking of the electrode assembly is reduced even in the case in which a positive electrode and a negative electrode are formed so as to have the same size.

Instead of a conventional structure in which the size of the positive electrode is designed so as to be less than the size of the negative electrode as the result of concern about short circuit of the electrode assembly 100, the structure according to the present invention is adopted for the electrode tab, whereby it is possible to manufacture a battery based on a design in which the positive electrode and the negative electrode have the same size. As a result, the capacity of a stacked type battery having the electrode tab according to the present invention is increased, compared to a conventional stacked type battery.

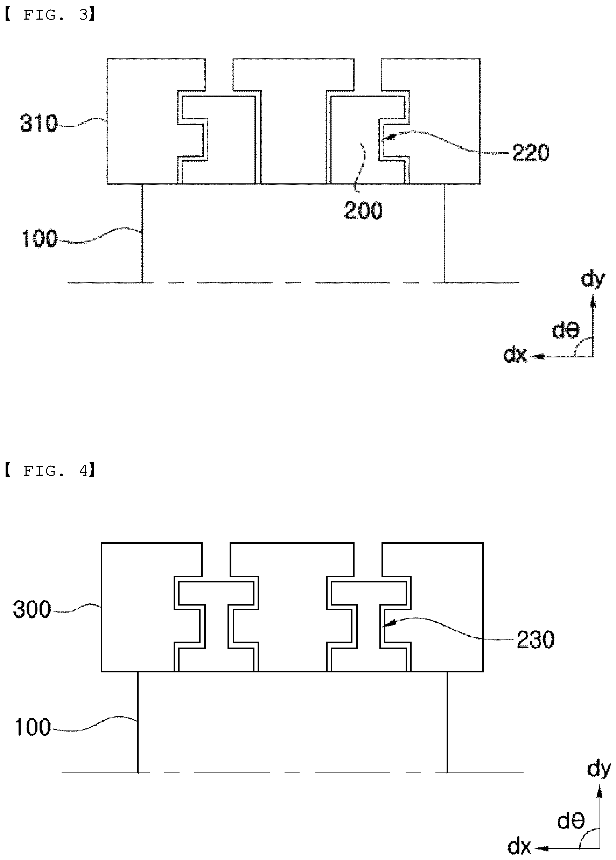

FIG. 3 is a top view schematically showing an electrode assembly according to a second embodiment of the present invention and a guide member based thereon.

In electrode tabs according to the present invention, as shown in FIG. 3, depressed portions 220 may be inwardly formed in outer surfaces of the electrode tabs protruding outwards from the electrode assembly 100, which do not face each other. Each of the depressed portions 220 may be formed in the surface of a corresponding one of the electrode tabs 200 that is perpendicular to the surface of the electrode assembly from which the electrode tabs 200 protrude, among the three surfaces of the electrode tabs 200. At this time, the depressed portions 220 are formed in a symmetrical fashion with respect to the center between opposite electrode tabs of the electrode assembly 100. The greater the number of depressed portions 220, the easier the electrode assembly 100 is fixed so as not to move in the dx, dy, and dθ directions. In addition, after electrode assemblies 100 are stacked, guide members 310 located at the left and right sides of the electrode assemblies may be moved leftwards and rightwards, respectively, and then the electrode assemblies 100 may be removed, or a guide member 310 located at the upper part of the electrode assemblies may be moved in the dy direction and then removed, whereby mobility of the electrode assemblies 100 may be minimized.

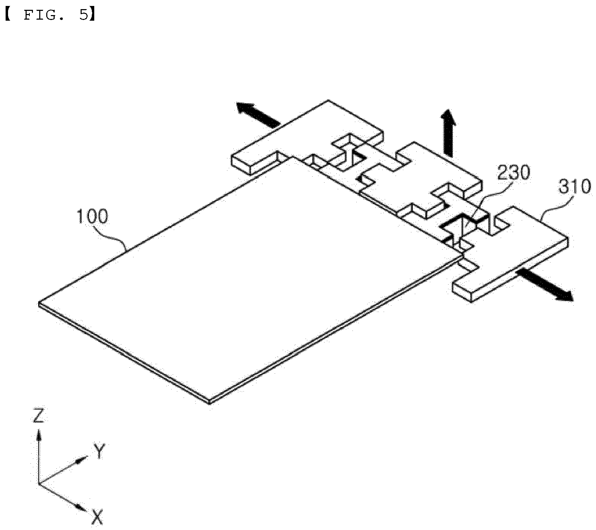

FIG. 4 is a top view schematically showing an electrode assembly according to a third embodiment of the present invention and a guide member based thereon, and FIG. 5 is a side view schematically showing the electrode assembly according to the third embodiment of the present invention and the guide member based thereon.

In electrode tabs according to the present invention, as shown in FIG. 4, depressed portions 230 may be inwardly formed in two surfaces, which do not face each other, of each of the electrode tabs protruding outwards from the electrode assembly 100. In this case, there is an advantage in that electrode assemblies 100 can be stacked with less shaking than the shapes of the first embodiment and the second embodiment. In the fourth embodiment shown in FIG. 4, a guide member 300 having a shape corresponding thereto is formed so as to be divided into three parts. As shown in FIG. 5, among the guide members 300, the left guide member 300 and the right member 300 are removed leftwards and rightwards, as in the second embodiment, and the center guide member 300 is removed in a Z-axis direction. In addition, the guide member 300 may have a shape configured to hold only the electrode tab, as shown in FIG. 4, or may have a shape configured to fix both the electrode assembly 100 and the electrode tab, as shown in FIG. 5.

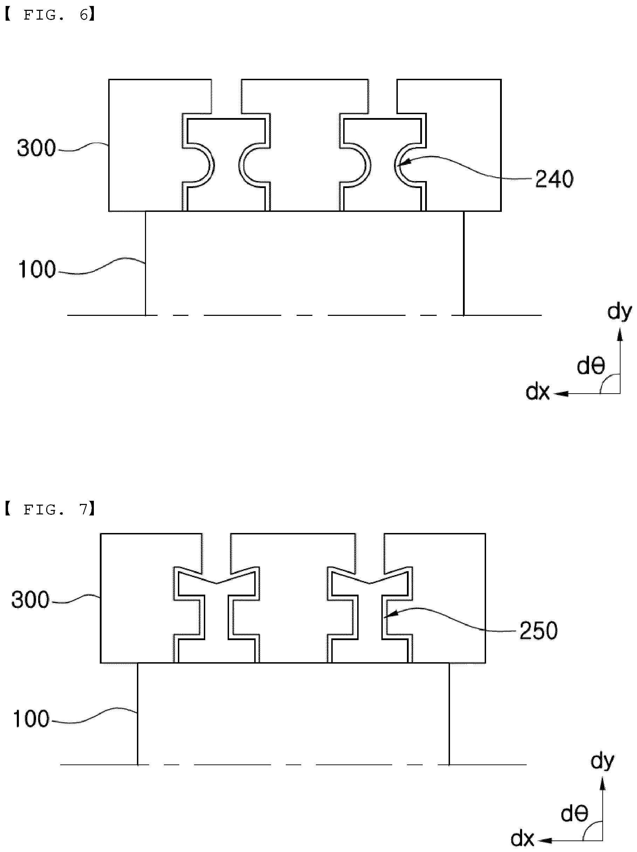

FIG. 6 is a top view schematically showing an electrode assembly according to a fourth embodiment of the present invention and a guide member based thereon.

In the electrode assembly 100 according to the fourth embodiment of the present invention, as shown in FIG. 6, depressed portions 240 may be inwardly formed in two surfaces of each of the electrode tabs protruding outwards therefrom, which do not face each other, in the same manner as in FIGS. 4 and 5. At this time, the depressed portions 240 may be rounded such that damage to the depressed portions due to movement of the guide member 300 and other impact is reduced. In the case in which the depressed portions 240 are provided as shown in FIG. 6, the electrode assembly 100 may be fixed to the guide member 300 using all outer surfaces and the depressed portions 240 of the electrode tabs.

FIG. 7 is a top view schematically showing an electrode assembly according to a fifth embodiment of the present invention and a guide member based thereon.

As in the fifth embodiment of FIG. 7, depressed portions 250 of the electrode assembly according to the fifth embodiment of the present invention may be formed in all of the three surfaces of each of the electrode tabs, and the depressed portions 250 may be formed in the three surfaces so as to have different shapes. In the case in which the depressed portions are formed in all of the three surfaces, the electrode assembly may be securely held, and the guide member 300 may have a shape configured to fix the electrode assembly at only some of the three surfaces, whereby it is possible to easily remove the guide member 300 configured to fix the electrode assembly 100.

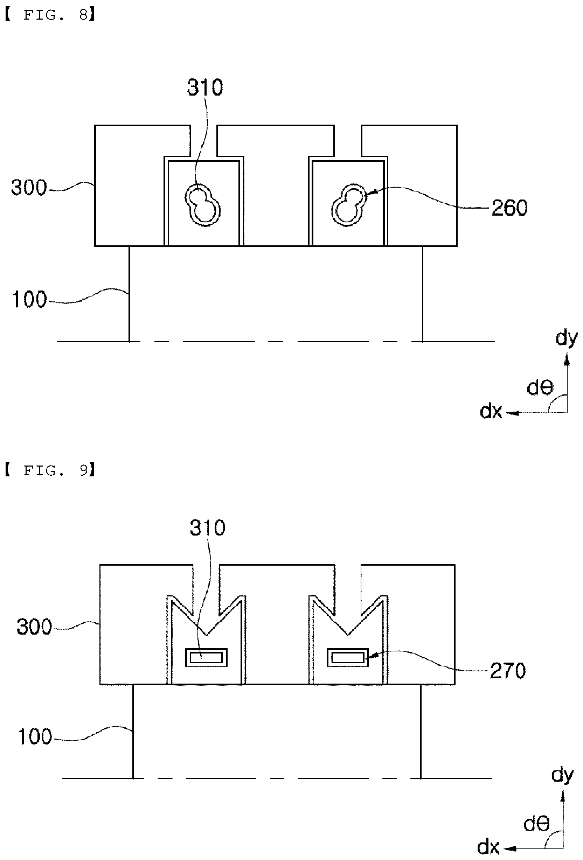

FIG. 8 is a top view schematically showing an electrode assembly according to a sixth embodiment of the present invention and a guide member based thereon.

As shown in FIG. 8, the electrode assembly 100 according to the present invention may have a depressed portion 260 formed through each electrode tab without abutting the three surfaces of the electrode tab. The depressed portion 260 may be configured so as to have a shape capable of forming one or more catching portions in a penetrated form. The depressed portion may have a triangular shape or a quadrangular shape. In addition, the depressed portion may have the shape of a snowman formed using two circular shapes or the shape of a flower formed using several circular shapes. Furthermore, the shape of the depressed portion is not restricted as long as the depressed portion has a shape capable of fixing the electrode assembly so as not to move in the dx and dy directions. In the case in which the depressed portion has a circular shape or an elliptical shape, however, it is difficult for the depressed portion to fix the electrode assembly so as not to move in the dx and dy directions. Consequently, the circular shape and the elliptical shape cannot be used. Embodiments of the shapes described above may be formed in electrode tabs in an individual form or a combined form.

In addition to the guide members 300 disposed at opposite sides of the electrode tabs to fix the electrode assembly, a separate guide member 310 may be inserted into the depressed portion 260 to fix the electrode assembly. The guide member 310, which is formed so as to correspond to the shape of the depressed portion 260 formed in the interior of each of the electrode tabs, may be configured to move upwards and downwards. At the time of stacking of electrode assemblies 100, the guide member 310 may be inserted into the depressed portions 260, and may then be removed after stacking.

FIG. 9 is a top view schematically showing an electrode assembly according to a seventh embodiment of the present invention and a guide member based thereon.

As in the seventh embodiment of FIG. 9, depressed portions 270 may be simultaneously formed in the interior and the edge of each electrode tab. Although not shown, the depressed portions 270 may be formed in only one of the two electrode tabs such that the electrode assembly is fixed. In addition, even in the case in which the electrode tabs protrude in different directions unlike this figure, the depressed portions 270 of the present invention may be formed. The depressed portions 270 may be formed in only one of the two electrode tabs such that the electrode assembly is fixed, or the depressed portions 270 may be formed in both the two electrode tabs such that the electrode assembly is fixed. In the case in which the number of catching portions constituted by the depressed portions is increased, as in the second to seventh embodiments, in the form in which the depressed portions 270 are formed in one of the two electrode tabs, electrode assemblies may be stacked without shaking even though the depressed portions are formed in one of the two electrode tabs. In the case in which a small number of catching portions is formed, the form in which the depressed portions 270 are formed in both the two electrode tabs is preferred in order to fix the electrode assemblies 100 at the time of stacking of the electrode assemblies. This may be selected depending on various conditions, such as the number of catching portions, the direction of the electrode tabs, ease in removal of the guide member 300, and the shapes of the electrode assembly 100 and the electrode tabs.

In addition, the guide members 300 or 310 of the present invention may be disposed at opposite sides of the electrode tabs protruding from the electrode assembly 100 and between the electrode tabs, or may be inserted into the depressed portions 270 located in the electrode tabs.

The present invention may provide an electrode assembly stacking guide member configured to correspond to a plurality of electrode assemblies having formed therein the depressed portions according to the above description and configured to enable the electrode assemblies to be stacked while being aligned. The electrode assembly stacking guide member may include a flat plate and moving members configured to be movable in an upward-downward direction and/or in a leftward-rightward direction depending on the shape of the electrode tabs.

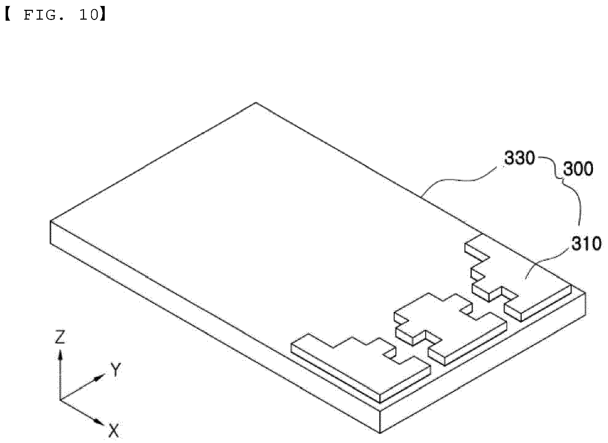

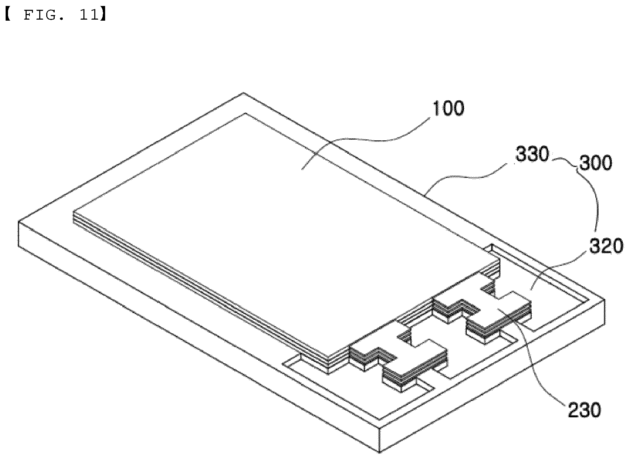

FIG. 10 is a perspective view schematically showing the state of the guide member according to the third embodiment of the present invention before stacking of electrode assemblies, and FIG. 11 is a perspective view schematically showing the state of the guide member according to the third embodiment of the present invention after stacking of the electrode assemblies.

The guide member 300 according to the present invention may have moving members 320 having a shape corresponding electrode assemblies to be stacked before the electrode assemblies are stacked, as shown in FIG. 10. As shown in FIG. 11, the moving members 320 may be moved after stacking and fixing the electrode assemblies 100. Each of the moving members 320 may be configured to be fixed to the plate 300 and to be separated from the plate so as to be removed. In addition, as shown in FIG. 5, the moving members 320 may be moved or removed in the X-axis and Y-axis directions of the electrode assemblies 100. A space in which the moving members 320 are movable in the dx direction may be formed such that the moving member 320 can be moved in the space. The movement of the moving members 320 may be performed by mechanical operation. The moving members 320 may be fitted into recesses of the plate in order to fix the electrode assemblies, and may be separated from the recesses of the plate so as to be removed.

Alternatively, the moving members 320 may be inserted into a predetermined space provided in the plate of the guide member 300 such that the electrode assemblies can be easily separated from the guide member. The moving members 320 may be inserted so as to move downwards by the same height of the plate of the guide member 300 or to move downwards lower than the plate such that the electrode assemblies 100 are easily separated. Insertion of the moving members 320 may be performed by dynamic operation based on external force, or may be performed by electrical operation based on system. In the case in which the shape of each of the electrode tabs is a shape capable of removing the guide member 300 in one direction, as in the first embodiment, it is possible to remove only the electrode assemblies 100 in the state in which the moving members 320 are fixed.

The present invention provides a stacked type battery manufacturing method including preparing a plurality of electrode sheets, each of the electrode sheets including electrode tabs having the depressed portions described above, stacking the electrode sheets and a separator to manufacture an electrode assembly, and fitting a guide member having a shape corresponding to the electrode tabs on the electrode tabs of the electrode assembly to align the electrode assembly. At this time, the electrode assembly manufacturing process and the electrode assembly alignment process may be integrated to provide a method of manufacturing the electrode assembly by fitting the electrode tabs in the guide member and stacking the separator at the time of manufacture of the electrode assembly. In addition, the guide member may fix the electrode tabs of the electrode assembly so as not to move in the dx, dy, and dθ directions, whereby the electrode assemblies may be stacked such that arrangements of positive electrodes and negative electrodes of the electrode assemblies in the stacking direction coincide with each other. Subsequently, the electrode assemblies are aligned, and then the guide member is removed. The manner in which the guide member is removed may be changed depending on the shape of each of the electrode tabs.

Although the specific details of the present invention have been described in detail, those skilled in the art will appreciate that the detailed description thereof discloses only preferred embodiments of the present invention and thus does not limit the scope of the present invention. Accordingly, those skilled in the art will appreciate that various changes and modifications are possible, without departing from the category and the technical idea of the present invention, and it will be obvious that such changes and modifications fall within the scope of the appended claims.

### - Description of Reference Numerals -

100: Electrode assembly
200: Electrode tab
210, 220, 230, 240, 250, 260, 270: Depressed portions
300, 310: Guide members
320: Moving member
330: Plate

### [ Industrial Applicability]

As is apparent from the above description, the present invention, which relates to an electrode assembly having a depression portion formed in an electrode tab, a guide member configured to stack the same, and a stacked type battery manufacturing method using the same, has advantages in that it is possible to reduce a phenomenon in which stacked electrodes are pushed, whereby it is possible to more accurately and conveniently locate the electrodes or unit cells in position thus to simplify the stacked type battery manufacturing method.

In addition, it is not necessary to design the size of a positive electrode so as to be less than the size of a negative electrode in order to prevent short circuit of the electrode assembly, whereby it is possible to increase the capacity of a battery.

## Claims

1. An electrode assembly comprising a plurality of electrode sheets having outwardly protruding electrode tabs and a separator interposed between the plurality of electrode sheets, wherein
a depressed portion is inwardly formed in at least one of three surfaces of each rectangular electrode tab protruding outwards from the electrode assembly.

2. The electrode assembly according to claim 1, wherein the depressed portion is formed in an edge abutting each of the three surfaces of the electrode tab.

3. The electrode assembly according to claim 1, wherein the depressed portion is formed through the electrode tab without abutting each of the three surfaces of the electrode tab.

4. The electrode assembly according to claim 1, wherein the depressed portions are simultaneously formed in an inner surface and an edge of the electrode tab.

5. The electrode assembly according to claim 1, wherein the depressed portion is formed in at least one of the three surfaces of the electrode tab in a triangular shape.

6. The electrode assembly according to claim 1, wherein the depressed portion is formed in at least one of the three surfaces of the electrode tab in a concavo-convex shape.

7. The electrode assembly according to claim 1, wherein the depressed portion is formed in at least one of the three surfaces of the electrode tab in a serrated shape.

8. The electrode assembly according to claim 1, wherein the depressed portion is formed in at least one of the three surfaces of the electrode tab in a semicircular shape or a half-elliptical shape.

9. The electrode assembly according to claim 1, wherein a shape of the depression portion consists of a curved line and/or a straight line alone in at least one of the three surfaces of the electrode tab.

10. The electrode assembly according to claim 1, wherein the depressed portions are formed in respective surfaces of the electrode tab perpendicular to the electrode assembly, and the depressed portions are symmetric to each other.

11. The electrode assembly according to claim 1, wherein the depressed portion is configured so as to have a shape capable of forming one or more catching portions in the electrode tab.

12. An electrode assembly stacking guide member configured to correspond to a plurality of electrode assemblies having formed therein the depressed portions according to any one of claims 1 to 11, wherein the electrode assembly stacking guide member is configured to enable the electrode assemblies to be stacked while being aligned.

13. The electrode assembly stacking guide member according to claim 12, wherein the electrode assembly stacking guide member comprises:
a flat plate; and
moving members configured to be movable in an upward-downward direction and/or in a leftward-rightward direction depending on a shape of the electrode tabs.

14. A stacked type battery manufacturing method comprising:
(1) preparing a plurality of electrode sheets, each of the electrode sheets comprising electrode tabs having the depressed portions according to any one of claims 1 to 11;
(2) stacking the electrode sheets and a separator to manufacture an electrode assembly;
(3) fitting the guide member according to claim 12 or claim 13 on the electrode tabs of the electrode assembly to align the electrode assembly; and
(4) fixing the electrode assembly and removing the guide member.

15. The stacked type battery manufacturing method according to claim 14, wherein, in step (3), the guide member fixes the electrode assembly so as not to move in all directions of dx, dy, and dθ based on the electrode tabs.

16. The stacked type battery manufacturing method according to claim 14, wherein, in step (4), the guide member is separated leftwards and rightwards.

17. The stacked type battery manufacturing method according to claim 14, wherein, in step (4), the moving members of the guide member are separated and moved from the flat plate at a lower end thereof so as to be removed from the electrode assembly after fixing of the electrode assembly.
